# EUROPEAN PATENT SPECIFICATION

(11) **EP 2 702 626 B1**
(45) Date of publication and mention of the grant of the patent: **14.06.2017**
(21) Application number: 11864203.2
(22) Date of filing: 26.04.2011
(51) Int. Cl.: H01M 8/0612, H01M 8/0267, H01M 8/04014, H01M 8/04029, H01M 8/10

(54) **INTERNAL STEAM GENERATION FOR FUEL CELL**
INTERNE DAMPFERZEUGUNG FÜR EINE BRENNSTOFFZELLE
GÉNÉRATION DE VAPEUR INTERNE POUR PILE À COMBUSTIBLE

(43) Date of publication of application: 05.03.2014
(73) Proprietor: Audi AG, 85045 Ingolstadt (DE)
(72) Inventor: RAMASWAMY, Sitaram, West Hartford, Connecticut 06107 (US)
(86) International application number: PCT/US2011/033848
(87) International publication number: WO 2012/148378

(56) References cited:
- WO-A1-2009/014512
- JP-A- 2005 259 440
- KR-A- 20040 072 246
- US-A- 5 700 595
- US-A1- 2003 162 065
- US-A1- 2004 028 970
- US-A1- 2005 164 058
- US-A1- 2008 176 119
- US-A1- 2011 003 224

## Description

### BACKGROUND

This disclosure relates to a fuel cell system. More particularly, the disclosure relates to a method and apparatus for generating steam within a fuel cell stack of a fuel cell system.

One typical fuel cell system includes a fuel cell stack having an anode plate and a cathode plate arranged on either side of a proton exchange membrane. The fuel stack also typically includes coolant channels, which circulates coolant in a coolant loop within the fuel cell system. One typical coolant is water.

Some fuel cell stacks produce coolant at temperatures below boiling point with the coolant ambient pressure with the fuel cell stack. Thus, no steam is produced inside such a fuel cell stack. To produce steam under such conditions, one example fuel cell system incorporates a valve and a flash evaporator arranged externally of the fuel cell stack to convert the low temperature coolant to steam. The steam is then used in a fuel reformation system.

US 2011/003224 A1 discloses a fuel cell system comprising a fuel cell stack including an anode plate and a cathode plate arranged on opposing sides of a proton exchange membrane, and coolant channels including an internal coolant passage in thermal contact with at least one of the cathode and anode plates. The fuel cell system is located in a non-pressurised region of an aircraft. When the fuel cell system is operated at the cruising altitude of the aircraft, the coolant channels are at a pressure below the atmospheric pressure at sea-level.

WO 2009/014512 A1 discloses a system and a method for abating volatile organic compounds in exhaust gases. The volatile organic compounds abatement system is combined with a fuel cell. The fuel cell is cooled by evaporative cooling, i.e. a part of the coolant is transformed into steam.

US 2005/164058 A1 discloses a fuel cell system, wherein a vacuum pump is connected to the fuel cell stack. The vacuum pump sucks fuel from a tank into the stack, thus establishing a vacuum within the fuel cell, and vaporizing water generated in the fuel cells at a low temperature.

### SUMMARY

Subject-matter of the present invention is a fuel cell system as claimed in independent claim 1, and a method of producing steam within a fuel cell system as claimed in independent claim 13. Embodiments of the invention are claimed in the respective dependent claims.

A fuel cell system includes a fuel cell stack having an anode plate and a cathode plate arranged on opposing sides of a proton exchange membrane. Cooling channels are in thermal contact with at least one of the anode plate and the cathode plate and include an internal coolant passage. A pressure-drop device is provided in the coolant channels and is configured to provide a sub-atmospheric pressure within the coolant passage. A compression device fluidly interconnects to and is downstream from the internal coolant passage by a coolant system loop and configured to convey a sub-atmospheric pressure coolant steam. The compression device is configured to increase the pressure and a temperature of the sub-atmospheric coolant steam to a super-atmospheric pressure and maintain the coolant steam within a steam region of a pressure-enthalpy curve.

Particular embodiments may include any of the following optional features, alone or in combination:
- The coolant channels may be provided by a porous layer of at least one of the anode plate and the cathode plate.
- The porous layer may provide the pressure drop device.
- The fuel cell system may comprise a spray nozzle arranged in the coolant passage configured to provide spray water droplets into the coolant passage for conversion to the coolant steam.
- The coolant channels may be provided by a solid non-porous plate provided by at least one of the anode plate and the cathode plate.
- The fuel cell system may comprise a spray nozzle arranged in the coolant passage configured to provide spray water droplets into the coolant passage for conversion to the coolant steam.
- The compression device may include a scroll compressor.
- The fuel cell system may comprise a fuel source in fluid communication with the coolant steam loop at a junction via a fuel supply line, the junction downstream from the compression device and configured to intermix a fuel and the super-atmospheric pressure coolant steam to provide a mixture.
- The fuel cell system may comprise a fuel processing system in fluid communication with the junction and configured to receive the mixture, the fuel processing system fluidly interconnected to the anode plate via a reformate line and configured to provide a reformate thereto through the reformate line.
- The fuel cell stack may be configured to operate at an equilibrium operating condition providing an internal cell stack coolant temperature of less than 100°C.
- The fuel cell system may comprise a building fluid loop, and a heat exchanger including the building fluid loop and the coolant steam loop configured to transfer heat therebetween.
- The coolant steam may be configured to undergo quasi-isentropic compression in the compression device in comparison to an entropy of the coolant steam within the fuel cell stack.

A method of producing steam within the fuel cell system includes a step of creating a pressure drop within a fuel cell stack to lower the boiling point of coolant within the fuel cell stack. The coolant is boiled within the fuel cell stack to produce steam. The pressure drop is created within coolant channels of the fuel cell stack by a pressure drop device provided in the coolant channels. The steam may be supplied to a component outside of the fuel cell stack via a coolant steam loop.

Particular embodiments may include any of the following optional features, alone or in combination:
- The creating step may include providing a coolant temperature within the stack of less than 100°C and a pressure of less than atmospheric pressure.
- The supplying step may include quasi-isentropically compressing the steam, in comparison to an entropy of the steam within the fuel cell stack, to a pressure greater than atmospheric pressure and maintaining the steam within a steam region of a pressure-enthalpy curve.

### BRIEF DESCRIPTION OF THE DRAWINGS

The disclosure can be further understood by reference to the following detailed description when considered in connection with the accompanying drawings wherein:
Figure 1 is a highly schematic view of an example fuel cell system with steam generation internal to the fuel cell stack.
Figure 2A is a schematic view of one example fuel cell stack.
Figure 2B is a schematic view of another example fuel cell stack.
Figure 2C is a schematic view of yet another example fuel cell stack.
Figure 2D is a schematic view of still another example fuel cell stack.
Figure 3 is a schematic view of another example fuel cell system having steam generation internal to the fuel cell stack.

### DETAILED DESCRIPTION

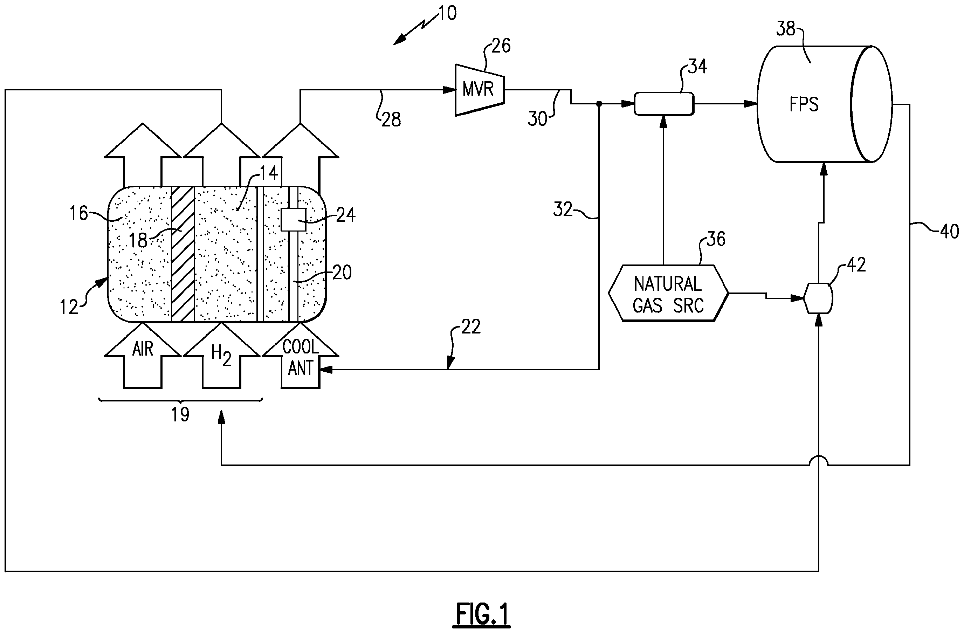

A fuel cell system 10 is schematically illustrated in Figure 1. The system 10 includes a fuel cell stack 12 having multiple cells 19 stacked relative to one another to produce a desired amount of electricity. Each cell 19 includes an anode plate 14 and a cathode plate 16 arranged on opposing sides of a proton exchange membrane 18, which is part of a unitized electrode assembly, for example.

Coolant channels 20 are arranged throughout the fuel cell stack 12, typically between the cells 19. A coolant loop 22 is in fluid communication with the coolant channels 20 and circulates a coolant, water in one example, throughout the system 10 to regulate the temperature of the fuel cell stack 12. The coolant may also be used for other purposes within the system 10, as needed.

Some low temperature fuel cell applications operate at a temperature that heats the coolant to less than 100°C. With water as the coolant, steam will not be generated under these conditions. However, steam can be useful within the system 10. To this end, the system 10 includes a pressure drop device 24 arranged internally to the fuel cell stack 12. As schematically illustrated in Figure 1, the coolant channels 20 provide an internal coolant passage with the pressure drop device 24 to lower the pressure of the coolant to the point at which it will boil and produce steam inside the fuel cell stack 12.

In the example, the coolant loop 22 includes a first coolant steam line 28 that conveys sub-atmospheric pressure steam to a compression device 26. The compression device 26 compresses the sub-atmospheric pressure steam, thus, also raising its temperature, to produce super-atmospheric pressure steam (for example, to 1.1 atmospheres and 150°C) that is conveyed through a second coolant steam line 30 to a junction 34.

A fuel source 36 supplies fuel to the junction 34, which intermixes the fuel and the super-atmospheric pressure coolant steam to provide a mixture. The mixture from the junction 34 is supplied to a fuel processing system 38 that produces reformate, which is provided to the anode plate 14 via a reformate line 40. The fuel source 36 may also provide fuel to a burner 42, which drives, in part, the fuel processing system 38. Unused coolant may be returned to the coolant channels 20 through a coolant return line 32.

The compression device 26 maintains the coolant steam within a steam region of a pressure-enthalpy curve. By generating the steam at sub- atmospheric pressures within the fuel cell stack, the sub- atmospheric pressure coolant steam can be quasi-isentropically compressed by the compression device.

The compression device 26, which may be a scroll compressor, for example, can be driven by an electric motor. The additional efficiency enabled by generating the steam internally within the fuel cell stack, rather than externally, is sufficient to provide an overall fuel cell efficiency increase despite the losses associated with the compression device.

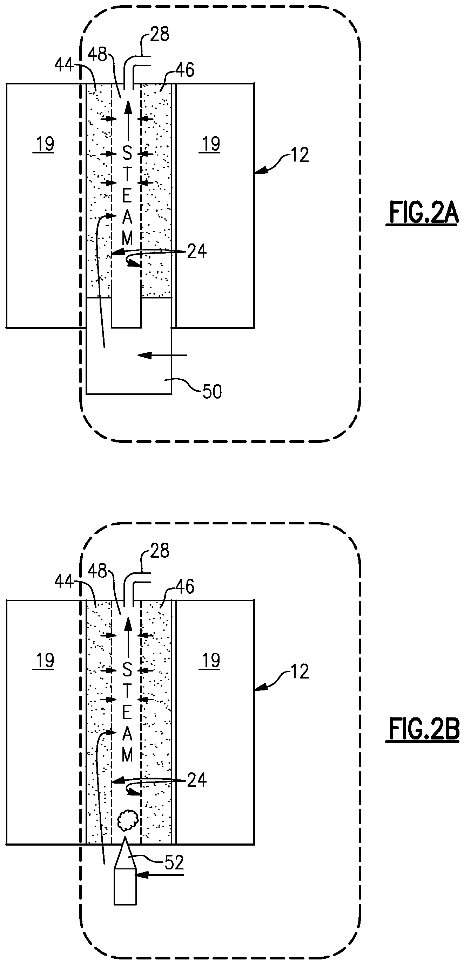

An example fuel cell stack 12 is illustrated in Figure 2A. In the example, the anode and cathode plates provide first and second porous layers 44, 46. An internal coolant passage 48 is provided between the first and second porous layers 44, 46. A coolant manifold 50 provides coolant to the first and second porous layers 44, 46 for desired humidification during fuel cell operation. Passage of processed water through the porous layers 44, 46 during fuel cell operation provides the pressure drop device 24, which enables the coolant that is at a temperature less than 100°C to boil in the sub- atmospheric pressure.

Another example fuel cell stack 112 is illustrated in Figure 2B. In this example, a spray nozzle 52 is used to provide droplets of water to the internal coolant passage 48, which will become steam in the sub-atmospheric pressures within the coolant passage 48 created by the porous layers.

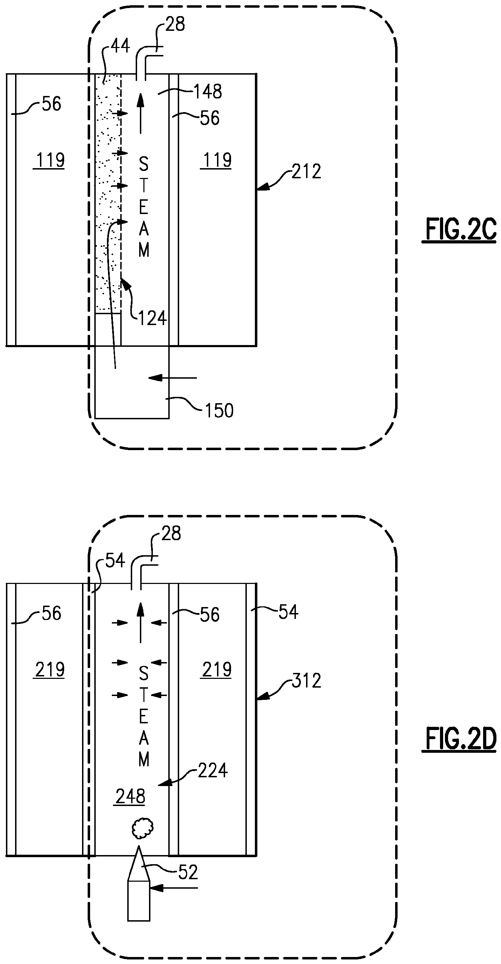

Another fuel cell stack 212 is illustrated in Figure 2C. The fuel cell stack 212 includes cell 119 having the first porous layer 44 and a second solid plate 56. That is, a porous plate provides one of the anode and cathode plates, and a solid plate provides the other plate. The coolant supplied by the coolant manifold 150 humidifies the first porous layer 44, which provides the pressure drop device 124. Steam is generated in the sub-atmospheric pressures.

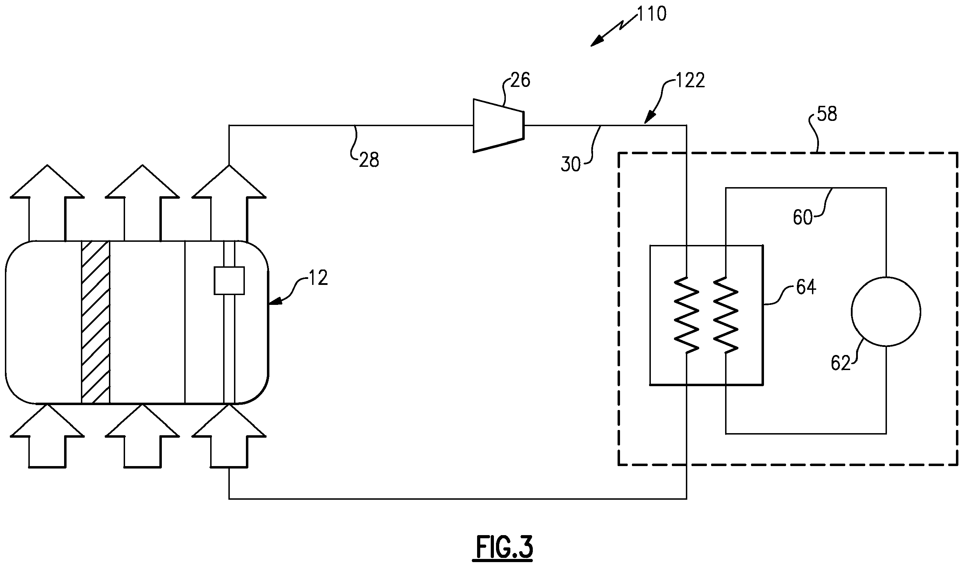

Referring to Figure 2D, a fuel cell stack 312 includes cells 219 that utilize first and second solid plates 54, 56. The internal coolant passage 248 is configured to provide a sub-atmospheric pressure, for example, by introducing restrictions in the coolant channels. Water droplets are introduced by the spray nozzle 52. The water is converted to steam in the sub- atmospheric pressure within the internal coolant passage 248.
Another fuel cell system 110 is illustrated in Figure 3. The coolant loop 122 generates steam in the same manner as described relative to Figure 1 above. The system 110 cooperates with a fluid loop 60 of a building 58, for example, to transfer heat from the coolant loop 122 to the fluid loop 60 via a heat exchanger 64. Heat is transferred between the coolant loop 122 and the fluid loop 60 to achieve a desired temperature of fluid within the fluid loop 60 for a building sub-system 62, for example, such as a building hot water system.

Although an example embodiment has been disclosed, a worker of ordinary skill in this art would recognize that certain modifications would come within the scope of the claims. For that reason, the following claims should be studied to determine their true scope and content.

## Claims

1. A fuel cell system (10; 110) comprising:
a fuel cell stack (12; 212; 312) including an anode plate (14) and a cathode plate (16) arranged on opposing sides of a proton exchange membrane (18), and coolant channels (20) including an internal coolant passage (48; 148; 248) in thermal contact with at least one of the cathode and anode plates (12, 14);
**characterized in that** the fuel cell system (10;110) further comprises:
a pressure drop device (24; 124; 224) provided in the coolant channels (20) and configured to provide a sub- atmospheric pressure within the coolant passage (48); and
a compression device (26) fluidly interconnected to and downstream from the internal coolant passage (48), in a coolant steam loop (22) configured to convey a sub-atmospheric pressure coolant steam, the compression device (26) being configured to increase the pressure and the temperature of the sub-atmospheric coolant steam to a super- atmospheric pressure and to maintain the coolant steam within a steam region of a pressure-enthalpy curve.

2. The fuel cell system (10; 110) according to claim 1, wherein the coolant channels (20) are provided by a porous layer (44, 46) of at least one of the anode plate (12) and the cathode plate (14).

3. The fuel cell system (10; 110) according to claim 2, wherein the porous layer (44, 46) provides the pressure drop device (24).

4. The fuel cell system (10; 110) according to claim 3, comprising a spray nozzle (52) arranged in the coolant passage (48) configured to provide spray water droplets into the coolant passage (48) for conversion to the coolant steam.

5. The fuel cell system (10; 110) according to any of claims 1 to 4, wherein the coolant channels (20) are provided by a solid non-porous plate provided by at least one of the anode plate (12) and the cathode plate (14).

6. The fuel cell system (10; 110) according to claim 5, comprising a spray nozzle (52) arranged in the coolant passage (48) configured to provide spray water droplets into the coolant passage (48) for conversion to the coolant steam.

7. The fuel cell system (10; 110) according to any of claims 1 to 6, wherein the compression device (26) includes a scroll compressor.

8. The fuel cell system (10; 110) according to any of claims 1 to 7, comprising a fuel source (36) in fluid communication with the coolant steam loop (22) at a junction via a fuel supply line, the junction downstream from the compression device (26) and configured to intermix a fuel and the super-atmospheric pressure coolant steam to provide a mixture.

9. The fuel cell system (10; 110) according to claim 8, comprising a fuel processing system in fluid communication with the junction and configured to receive the mixture, the fuel processing system fluidly interconnected to the anode plate via a reformate line and configured to provide a reformate thereto through the reformate line.

10. The fuel cell system (10; 110) according to any of claims 1 to 9, wherein the fuel cell stack (12; 212; 312) is configured to operate at an equilibrium operating condition providing an internal cell stack coolant temperature of less than 100°C.

11. The fuel cell system (110) according to any of claims 1 to 9, comprising a building fluid loop (60), and a heat exchanger (64) including the building fluid loop (60) and the coolant steam loop (30) configured to transfer heat there between.

12. The fuel cell system (10; 110) according to any of claims 1 to 10, wherein the coolant steam is configured to undergo quasi-isentropic compression in the compression device (26) in comparison to an entropy of the coolant steam within the fuel cell stack (12; 212; 312).

13. A method of producing steam within a fuel cell system (10; 110) comprising:
creating a pressure drop within a fuel cell stack (12; 212; 312) to lower the boiling point of coolant within the fuel cell stack (12; 212; 312);
boiling the coolant within the fuel cell stack (12; 212; 312) to produce steam,
the method being **characterized in that** the pressure drop is created within coolant channels (20) of the fuel cell stack (12; 212; 312) by a pressure drop device (24; 124; 224) provided in the coolant channels (20).

14. The method according to claim 13, wherein the creating step includes providing a coolant temperature within the stack of less than 100°C and a pressure of less than atmospheric pressure.

15. The method according to claim 13 or 14, wherein the method further comprises supplying the steam to a component outside of the fuel cell stack (12; 212; 312) via a coolant steam loop,the supplying step including quasi-isentropically compressing the steam, in comparison to an entropy of the steam within the fuel cell stack, to a pressure greater than atmospheric pressure and maintaining the steam within a steam region of a pressure-enthalpy curve.

## Patentansprüche

1. Ein Brennstoffzellensystem (10; 110) umfassend:
ein Brennstoffzellenstack (12; 212; 312) umfassend eine Anodenplatte (14) und eine Kathodenplatte (16), welche auf gegenüberliegenden Seiten einer Protonenaustauschmembran (18) angeordnet sind, und Kühlmittelkanälen (20) umfassend einen inneren Kühlmitteldurchgang (48; 148; 248) in thermischem Kontakt mit mindestens einer der Kathoden- und Anodenplatten (12, 14);
**dadurch gekennzeichnet, dass** das Brennstoffzellensystem (10; 110) des Weiteren umfasst:
eine Druckabfallvorrichtung (24; 124; 224), welche in den Kühlmittelkanälen (20) vorgesehen ist und so konfiguriert ist, dass sie einen subatmosphärischen Druck innerhalb des Kühlmitteldurchgangs (48) bereitstellt; und
eine Kompressionsvorrichtung (26), welche nachgelagert von und mit dem inneren Kühlmitteldurchgang (48) fluidmäßig in einer Kühlmitteldampfschleife (22) verbunden ist, so konfiguriert, dass sie einen subatmosphärischen Druckkühlmitteldampf transportiert, wobei die Kompressionsvorrichtung (26) so konfiguriert ist, den Druck und die Temperatur des subatmosphärischen Kühlmitteldampfes auf einen überatmosphärischen Druck zu erhöhen und den Kühlmitteldampf in einem Dampfbereich einer Druckenthalpiekurve aufrechtzuerhalten.

2. Das Brennstoffzellensystem (10; 110) gemäß Anspruch 1, wobei die Kühlmittelkanäle (20) durch eine poröse Schicht (44, 46) von mindestens einer von der Anodenplatte (12) und der Kathodenplatte (14) bereit gestellt sind.

3. Das Brennstoffzellensystem (10; 110) gemäß Anspruch 2, wobei die poröse Schicht (44, 46) die Druckabfallvorrichtung (24) bereit stellt.

4. Das Brennstoffzellensystem (10; 110) gemäß Anspruch 3, umfassend eine in dem Kühlmitteldurchgang (48) angeordnete Sprühdüse (52), welche so konfiguriert ist, dass sie Sprühwassertröpfchen in den Kühlmitteldurchgang (48) zur Umwandlung in den Kühlmitteldampf einführt.

5. Das Brennstoffzellensystem (10; 110) gemäß irgendeinem der Ansprüche 1 bis 4, wobei die Kühlmittelkanälen (20) durch eine feste, nicht-poröse Platte bereit gestellt sind, welche durch mindestens eine von der Anodenplatte (12) und der Kathodenplatte (14) bereit gestellt ist.

6. Das Brennstoffzellensystem (10; 110) gemäß Anspruch 5, umfassend eine in dem Kühlmitteldurchgang (48) angeordnete Sprühdüse (52), welche so konfiguriert ist, dass sie Sprühwassertröpfchen in den Kühlmitteldurchgang (48) zur Umwandlung in den Kühlmitteldampf bereit stellt.

7. Das Brennstoffzellensystem (10; 110) gemäß irgendeinem der Ansprüche 1 bis 6, wobei die Kompressionsvorrichtung (26) einen Scroll-Kompressor umfasst.

8. Das Brennstoffzellensystem (10; 110) gemäß irgendeinem der Ansprüche 1 bis 7, umfassend eine Brennstoffquelle (36) in Fluidverbindung mit der Kühlmitteldampfschleife (22) an einer Verbindungsstelle über eine Brennstoffversorgungsleitung, wobei der Übergang nachgelagert der Kompressionsvorrichtung (26) angeordnet ist und so konfiguriert ist, dass er einen Brennstoff und den Überdruckkühlmitteldampf vermischt, um ein Gemisch bereitzustellen.

9. Das Brennstoffzellensystem (10; 110) gemäß Anspruch 8, umfassend ein Brennstoffverarbeitungssystem, welches in Fluidverbindung mit dem Übergang steht und so konfiguriert ist, dass es die Mischung aufnimmt, wobei das Brennstoffverarbeitungssystem über eine Reformatlinie fluidmäßig mit der Anodenplatte verbunden ist und so konfiguriert ist, dass es ein Reformat durch die Reformatlinie liefert.

10. Das Brennstoffzellensystem (10; 110) gemäß irgendeinem der Ansprüche 1 bis 9, wobei das Brennstoffzellenstack (12; 212; 312) so konfiguriert ist, dass sie bei einem Gleichgewichtsbetriebszustand arbeitet, welcher eine interne Zellenstackkühlmitteltemperatur von weniger als 100 °C bereit stellt.

11. Das Brennstoffzellensystem (110) gemäß irgendeinem der Ansprüche 1 bis 9, umfassend eine Gebäudefluidschleife (60) und einen Wärmetauscher (64) umfassend die Gebäudefluidschleife (60) und die Kühlmitteldampfschleife (30), die so konfiguriert ist, dass sie dort dazwischen Wärme hin transferiert.

12. Das Brennstoffzellensystem (10; 110) gemäß irgendeinem der Ansprüche 1 bis 10, wobei der Kühlmitteldampf so konfiguriert ist, um einer quasi-isentropische Kompression in der Kompressionsvorrichtung (26) ausgesetzt zu sein im Vergleich zu einer Entropie des Kühlmitteldampfs innerhalb des Brennstoffzellenstack (12; 212; 312).

13. Ein Verfahren zum Herstellen von Dampf innerhalb eines Brennstoffzellensystem (10; 110) umfassend:
Erzeugen eines Druckabfalls in einem Brennstoffzellenstapel (12; 212; 312), um den Siedepunkt des Kühlmittels innerhalb des Brennstoffzellenstack (12; 212; 312) zu senken;
Kochen des Kühlmittels innerhalb des Brennstoffzellenstack (12; 212; 312), um Dampf zu erzeugen,
wobei das Verfahren dadurch charakterisiert ist, dass der Druckabfall in den Kühlmittelkanälen (20) des Brennstoffzellenstack (12; 212; 312) durch eine in den Kühlmittelkanälen (20) vorgesehene Druckabfallvorrichtung (24; 124; 224) erzeugt wird.

14. Das Verfahren gemäß Anspruch 13, wobei der Erstellungsschritt das Bereitstellen einer Kühlmitteltemperatur innerhalb des Stack von weniger als 100 °C und einen Druck von weniger als atmosphärischem Druck umfasst.

15. Das Verfahren gemäß Anspruch 13 oder 14, wobei das Verfahren des Weiteren das Zuführen des Dampfes zu einer Komponente außerhalb des Brennstoffzellenstack (12; 212, 312) über eine Kühlmitteldampfschleife umfasst, wobei der Zuführungsschritt eine quasi-isentrope Kompression des Dampfes, im Vergleich zu einer Entropie des Dampfes innerhalb des Brennstoffzellenstack, auf einen Druck, welcher größer als der atmosphärische Druck ist und Aufrechterhalten des Dampfes innerhalb eines Dampfbereichs einer Druckenthalpiekurve umfasst.

## Revendications

1. Système de piles à combustible (10 ; 110) comportant :
un empilement de piles à combustible (12 ; 212; 312) comprenant une plaque d'anode (14) et une plaque de cathode (16) agencées sur des côtés opposés d'une membrane d'échange de protons (18), et des canaux de réfrigérant (20) comprenant un passage de réfrigérant interne (48; 148; 248) en contact thermique avec au moins une des plaques de cathode et d'anode (12,14) ;
**caractérisé en ce que** le système de piles à combustible (10; 110) comporte en outre :
un dispositif de chute de pression (24; 124; 224) disposé dans les canaux de réfrigérant (20) et configuré pour fournir une pression sub-atmosphérique à l'intérieur du passage de réfrigérant (48) ; et
un dispositif de compression (26) interconnecté de manière fluidique au passage de réfrigérant interne (48) et en aval de celui-ci, dans une boucle de vapeur de réfrigérant (22) configurée pour transporter une vapeur de réfrigérant de pression sub-atmosphérique, le dispositif de compression (26) étant configuré pour augmenter la pression et la température de la vapeur de réfrigérant sub-atmosphérique à une pression sur-atmosphérique et pour maintenir la vapeur de réfrigérant à l'intérieur d'une région de vapeur d'une courbe pression-enthalpie.

2. Système de piles à combustible (10; 110) selon la revendication 1, dans lequel les canaux de réfrigérant (20) sont fournis par une couche poreuse (44, 46) d'au moins l'une parmi la plaque d'anode (12) et la plaque de cathode (14).

3. Système de piles à combustible (10; 110) selon la revendication 2, dans lequel la couche poreuse (44, 46) fournit le dispositif de chute de pression (24).

4. Système de piles à combustible (10; 110) selon la revendication 3, comportant une buse de pulvérisation (52) agencée dans le passage de réfrigérant (48) configurée pour fournir des gouttelettes d'eau de vaporisation dans le passage de réfrigérant (48) pour une conversion en la vapeur de réfrigérant.

5. Système de piles à combustible (10; 110) selon l'une quelconque des revendications 1 à 4, dans lequel les canaux de réfrigérant (20) sont fournis par une plaque solide non poreuse fournie par au moins l'une parmi la plaque d'anode (12) et la plaque de cathode (14).

6. Système de piles à combustible (10; 110) selon la revendication 5, comportant une buse de pulvérisation (52) agencée dans le passage de réfrigérant (48) configurée pour fournir des gouttelettes d'eau de vaporisation dans le passage de réfrigérant (48) pour une conversion en la vapeur de réfrigérant.

7. Système de piles à combustible (10; 110) selon l'une quelconque des revendications 1 à 6, dans lequel le dispositif de compression (26) comprend un compresseur à spirale.

8. Système de piles à combustible (10; 110) selon l'une quelconque des revendications 1 à 7, comportant une source de combustible (36) en communication fluidique avec la boucle de vapeur de réfrigérant (22) au niveau d'une jonction via une ligne d'approvisionnement en combustible, la jonction étant en aval du dispositif de compression (26) et configurée pour intermélanger un combustible et la vapeur de réfrigérant de pression sur-atmosphérique pour fournir un mélange.

9. Système de piles à combustible (10; 110) selon la revendication 8, comportant un système de traitement de combustible en communication fluidique avec la jonction et configuré pour recevoir le mélange, le système de traitement de combustible étant interconnecté de manière fluidique à la plaque d'anode via une ligne de reformat et configuré pour fournir un reformat à celle-ci par le biais de la ligne de reformat.

10. Système de piles à combustible (10; 110) selon l'une quelconque des revendications 1 à 9, dans lequel l'empilement de piles à combustible (12 ; 212 ; 312) est configuré pour fonctionner à une condition de fonctionnement d'équilibre fournissant une température de réfrigérant d'empilement de cellules interne de moins de 100 °C.

11. Système de piles à combustible (110) selon l'une quelconque des revendications 1 à 9, comportant une boucle de fluide de bâtiment (60), et un échangeur thermique (64) comprenant la boucle de fluide de bâtiment (60) et la boucle de vapeur de réfrigérant (30) configuré pour transférer la chaleur entre celles-ci.

12. Système de piles à combustible (10; 110) selon l'une quelconque des revendications 1 à 10, dans lequel la vapeur de réfrigérant est configurée pour subir une compression quasi isentropique dans le dispositif de compression (26) en comparaison à une entropie de la vapeur de réfrigérant à l'intérieur de l'empilement de piles à combustible (12 ; 212 ; 312).

13. Procédé de production de vapeur à l'intérieur d'un système de piles à combustible (10; 110) comportant:
la création d'une chute de pression à l'intérieur d'un empilement de piles à combustible (12 ; 212 ; 312) pour abaisser le point d'ébullition du réfrigérant à l'intérieur de l'empilement de piles à combustible (12 ; 212 ; 312) ;
l'ébullition du réfrigérant à l'intérieur de l'empilement de piles à combustible (12 ; 212 ; 312) pour produire de la vapeur,
le procédé étant **caractérisé en ce que** la chute de pression est créée à l'intérieur de canaux de réfrigérant (20) de l'empilement de piles à combustible (12 ; 212 ; 312) par un dispositif de chute de pression (24; 124 ; 224) fourni dans les canaux de réfrigérant (20).

14. Procédé selon la revendication 13, dans lequel l'étape de création comprend la fourniture d'une température de réfrigérant à l'intérieur de l'empilement de moins de 100 °C et d'une pression inférieure à la pression atmosphérique.

15. Procédé selon la revendication 13 ou 14, dans lequel le procédé comporte en outre l'approvisionnement en vapeur à un composant en dehors de l'empilement de piles à combustible (12 ; 212 ; 312) via une boucle de vapeur de réfrigérant, l'étape d'approvisionnement comprenant la compression quasi isentropique de la vapeur, en comparaison à une entropie de la vapeur à l'intérieur de l'empilement de piles à combustible, à une pression supérieure à la pression atmosphérique et le maintien de la vapeur à l'intérieur d'une région de vapeur d'une courbe pression-enthalpie.
